# EUROPÄISCHE PATENTSCHRIFT

(11) **EP 1 921 869 B1**
(45) Veröffentlichungstag und Bekanntmachung des Hinweises auf die Patenterteilung: **20.03.2013**
(21) Anmeldenummer: 07012345.0
(22) Anmeldetag: 23.06.2007
(51) Int. Cl.: H04L 12/26, H04N 17/04, H04N 17/00

(54) **System zur Überwachung und Steuerung von Geräten der Telekommunikation**
System for monitoring and actuating telecommunication devices
Système destiné à la surveillance et à la commande d'appareils de télécommunication

(30) Priorität: 23.06.2006 ES 200601735
(43) Veröffentlichungstag der Anmeldung: 14.05.2008
(73) Patentinhaber: Sistemas Integrados de Servicios de Telecontrol, S.L., 15706 A. Rocha-Stgo. de Compostela (ES)
(72) Erfinder: Loyacondo Pardo, Gabriel, 15706 A Rocha-Santiago de Compostela (ES); Ledo Gavieiro, Luis, 15706 A Rocha-Santiago de Compostela (ES); Fernández Carnero, José Luis, 15895 Teo- A Coruna (ES)
(74) Vertreter: Dosterschill, Peter

(56) Entgegenhaltungen:
- WO-A1-2005/125220
- US-A- 5 664 973
- US-A1- 2002 019 983
- US-A1- 2003 030 412

## Beschreibung

Die Erfindung betrifft ein System zur Überwachung und Steuerung von Geräten zur Messung von Telekommunikationssignalen nach dem Oberbegriff des Anspruchs 1.

Telekommunikationsmessgeräte, insbesondere Messgeräte zur Messung von Fernsehsignalen, die in Gemeinschaftsantennenanlagen MATV oder SMATV verwendet werden, haben den Nachteil, dass sie im Hinblick auf ihr Einsatzgebiet (Türme, Antennenmasten, usw.) wenig handhabbar sind. Das bedeutet, dass sich in vielen Fällen eine Messung praktisch als nicht durchführbar erweist oder dass die Messungen mit einem großen Fehler durchgeführt werden.

Aus WO 2005/125220A ist ein Verfahren und eine Vorrichtung zur Bewertung der Güte eines Signals bekannt. Die Vorrichtung umfasst einen Hauptrechner (50), der über eine Visualisierungsschnittstelle (80) mit einer grafischen Anzeigeeinrichtung (70) verbunden ist, die dem Anwender auch als Eingabe-Medium zur Einstellung von Parametern und zur Steuerung des Verfahrens dient. In einer ersten Ausführungsform ist der Hauptrechner (50) mit mehreren Test-Messempfängern (10, 20, 30, 30) und in einer zweiten Ausführungsform mit genau einem Test-Messempfänger (10) verbunden. Messwerte in den einzelnen Test-Messempfängern (10, 20, 30, 40) werden von dem Hauptrechner (50) über eine Fernsteuerung bzw. Femabfrage auf der Basis von Standard-Datenübertragungsschnittstellen (60), beispielsweise RS 232- oder IEC-Bus-Schnittstellen, abgefragt, verarbeitet und visualisiert.

Aus US 2002/0019983 A1 ist ein" instrument for testing CATV systems" bekannt. Dieses "testing instrument" (20) weist einen Eingang (input port) zum Empfang einer ersten Information aus einem Netzwerk auf sowie einen Rechner (computer PC 22).
Das testing instrument (20) kann Steuerbefehle von Systemkomponenten erhalten und entsprechende Aufgaben durchführen. Weiterhin kann das testing instrument (20) auch Steuerbefehle an ein System oder eine Komponente eines CATV-Netzwerks übermitteln, und damit bestimmte Funktionen in dem anderen System bzw. in der Komponente des CATV-Netzwerkes auslösen.

Aus US 2003/0030412 A1 ist eine Schaltungsanordnung zur Steuerung von Batterieaufladevorgängen bekannt, wobei eine USB-Schnittstelle verwendet wird.

Aus US 5 664 973 sind Kontaktelemente und Aufnahmeöffnungen, insbesondere für eine Aufladung elektronischer Geräten wie beispielsweise Funkgeräte, Mobiltelefongeräte, Schnurlostelefone und drahtlose Kommunikationsgeräte bekannt.

Die Aufgabe der vorliegenden Erfindung besteht darin, ein System zur Überwachung und zur Steuerung von Geräten zur Messung von Telekommunikationssignalen anzugeben, welches die einfache und genaue Durchführung von Messungen selbst in ungünstigen Umgebungen erlaubt und benutzerfreundlich ausgestaltet ist.

Diese Aufgabe wird erfindungsgemäß durch ein System gelöst, das in den Ansprüchen definiert ist.

Die Erfindung weist eine Mehrzahl von Vorteilen auf.

Ein Ausführungsbeispiel des erfindungsgemäßen Systems zur Überwachung und Steuerung von Geräten zur Messung von Telekommunikationssignalen weist eine erste System-Einheit und mindestens eine zweite System-Einheit auf.

Die erste System-Einheit ist eine Zentraleinheit und die zweite System-Einheit ist eine Einheit für die Messung von Telekommunikationssignalen an unterschiedlichen Orten.
Die mindestens eine zweite System-Einheit ist in der Weise ausgestaltet, dass sie ein erstes Telekommunikationssignal an die erste System-Einheit überträgt, das eine erste Information über Funktionen enthält, die die erste System-Einheit auszuführen hat.
Die erste System-Einheit ist in der Weise ausgestaltet, dass sie ein zweites Telekommunikationssignal an die mindestens eine zweite System-Einheit überträgt, das eine zweite Information über mindestens ein Ergebnis einer von der ersten System-Einheit ausgeführten Funktion enthält.
Die erste System-Einheit und die zweite System-Einheit, die eine periphere Einheit ist, sind zwei separate Einheiten und räumlich getrennt oder durch Integration der zweiten System-Einheit in einer Aufnahmeöffnung der ersten System-Einheit miteinander verbunden. Die zweite System-Einheit ist mobil bezüglich der ersten System-Einheit.
Die erste System-Einheit und die zweite System-Einheit sind in der Weise ausgestaltet, dass bei einer Integration der zweiten System-Einheit in der Aufnahmeöffnung der ersten System-Einheit bidirektionale Informationen zwischen beiden System-Einheiten und Energie von der ersten System-Einheit in die zweite System-Einheit übertragen werden, und dass bei einer Nicht-Integration der zweiten System-Einheit in der Aufnahmeöffnung der ersten System-Einheit bidirektionale Informationen zwischen beiden System-Einheiten übertragen werden.
Das erfindungsgemäße System ist dadurch gekennzeichnet, dass die erste System-Einheit und die zweite System-Einheit jeweils eine optische Anzeigeeinheit zur Anzeige von Informationen und zur Steuerung aufweist, und dass die erste System-Einheit unabhängig von der zweiten System-Einheit betrieben werden kann.

Die Ausgestaltung des erfindungsgemäßen Systems mit einer ersten System-Einheit und einer zweiten System-Einheit bietet ein Spektrum anwenderfreundlicher Einsatzmöglichkeiten: Das erfindungsgemäße System ermöglicht es, die von der ersten System-Einheit auszuführenden Funktionen zu steuern und sichtbar zu machen. Das kann zum einen durch Bedienung der ersten System-Einheit, zum anderen aber auch durch Bedienung der zweiten System-Einheit erfolgen.

Eine weitere, vorteilhafte Ausführungsform des erfindungsgemäßen Systems ist dadurch gekennzeichnet, dass die Steuerung und die Überwachung der Kopfeinheit der Gemeinschaftsantennenanlage (SMATV) über das Internet oder mittels Drahtlosstandards (GPRS, UMTS, usw.) erfolgt.

Dies hat den Vorteil; dass die Benutzung öffentlicher Telekommunikationsnetze ermöglicht wird, und die Steuerung und die Überwachung von Kopfeinheiten von SMATV über große Entfernungen erleichtert wird.

Eine weitere, vorteilhafte Ausführungsform des erfindungsgemäßen Systems ist dadurch gekennzeichnet, dass die radioelektrische (drahtlose) Verbindung zwischen der ersten Einheit und der zweiten Einheit mittels der Protokollfamilien IEEE 802.11 und IEE 802.15 erfolgt.

Damit wird in vorteilhafter Weise die Wahrscheinlichkeit verringert, dass Störungen in der Kommunikation auftreten, indem Standardprotokolle verwendet werden.

Zu einem besseren Verständnis der Erfindung wird beispielhaft und nicht abschließend ein System zur Überwachung und Steuerung Geräten zur Messung von Telekommunikationssignalen gemäß der Erfindung anhand der Zeichnungen beschrieben.

Dabei zeigt
- Figur 1: ein beispielhaftes Schema eines erfindungsgemäßen Systems zur Überwachung und Steuerung von Geräten der Telekommunikation;
- Figur 2: ein Beispiel eines Blockschaltbildes einer zweiten (mobilen) Einheit eines erfindungsgemäßen Systems nach Figur 1; und
- Figur 3: ein Beispiel eines Blockschaltbildes einer ersten (Zentral-) Einheit eines erfindungsgemäßen Systems nach Figur 1.

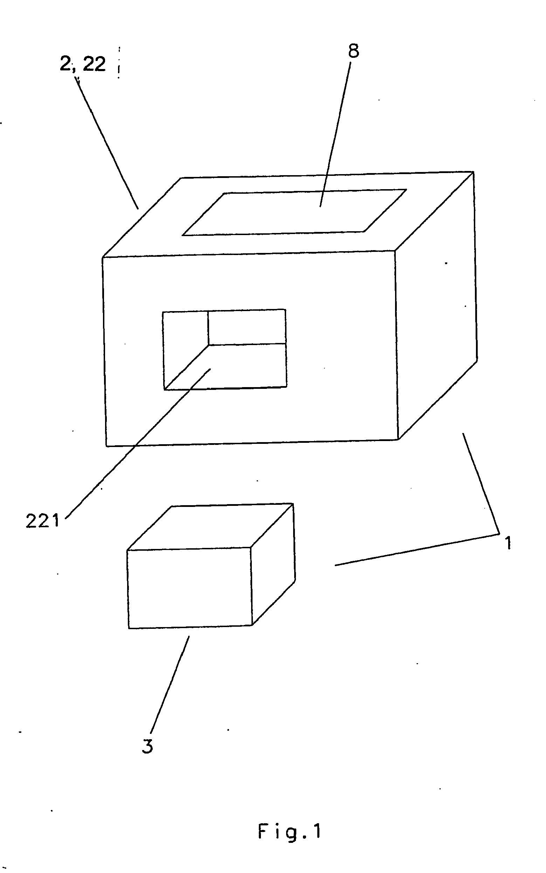

Figur 1 zeigt ein Beispiel eines Schemas eines erfindungsgemäßen Systems zur Überwachung und Steuerung von Geräten der Telekommunikation. Wie deutlich zu erkennen ist, besteht das System aus einer ersten Einheit 2 (Zentraleinheit) und aus mindestens einem zweiten Einheit 3 (peripheres Endgerät).
Die erste Einheit 2 kann aus einer oder mehreren Schaltplatinen (21) bestehen, die in ein Gerät (zum Beispiel eine Messeinrichtung oder eine SMATV-Kopfeinheit) eingeführt werden oder aus einem Gerät (22) mit einem Gehäuse bestehen. Der letztgenannte Fall ist in Figur 1 dargestellt, wobei die erste Einheit 2 über eine Aufnahmeöffnung 221 verfügt, in die die zweite Einheit 3 zur Aufladung in Zeiten eingeführt wird, in denen es nicht anderweitig benutzt wird.

Die zweite Einheit 3 ist in der Weise ausgestaltet, dass sie ein erstes Telekommunikationssignal an die erste Einheit 2 überträgt, wobei das erste Telekommunikationssignal eine erste Information über Funktionen enthält, die die erste Einheit 2 auszuführen hat.

Die erste Einheit 2 ist in der Weise ausgestaltet, dass sie ein zweites Telekommunikationssignal an die zweite Einheit 3 überträgt, wobei das zweite Telekommunikationssignal eine zweite Information über mindestens ein Ergebnis einer von der ersten Einheit 2 ausgeführten Funktion enthält.

Die Übertragung des ersten Telekommunikationssignals und/oder des zweiten Telekommunikationssignals erfolgt vorzugsweise drahtlos.

Das erste und/oder das zweite Telekommunikationssignal hat vorzugsweise eine Bandbreite zwischen 1,5 Megabit und 2,5 Megabit, insbesondere eine Bandbreite von 2,0 Megabit.

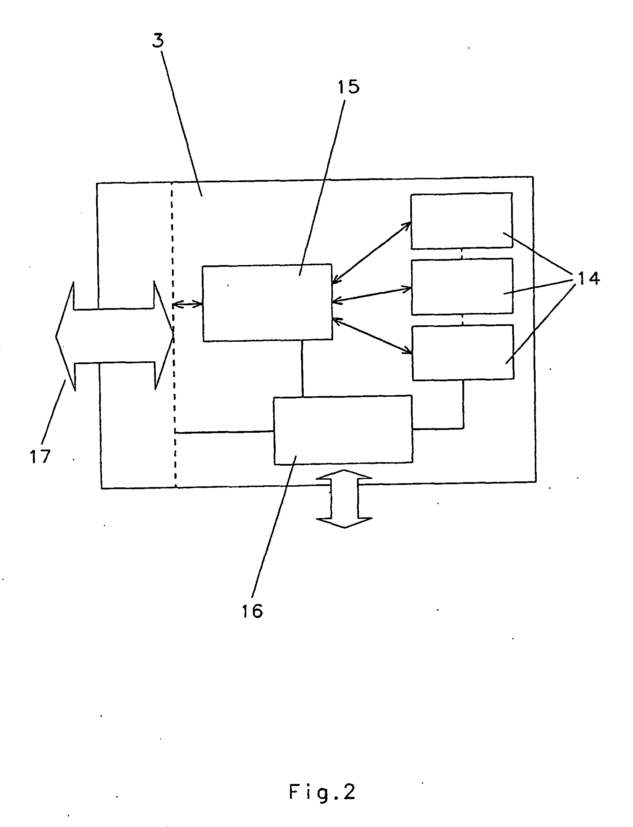

Figur 2 zeigt ein Beispiel eines Blockschaltbildes der zweiten Einheit 3 des zuvor beschriebenen Systems. Die zweite Einheit 3 weist Erfassungsmodule 14 auf, wobei deren Anzahl der Anzahl der zu messenden Signale entspricht. Die Signale können radioelektrische oder elektrische Signale oder Signale anderer Beschaffenheit sein, analoge oder digitale Signale; sie können ihren Ursprung im der Umgebung der zweiten Einheit 3 haben oder das Ergebnis einer entsprechenden Aktion. An den Ausgängen der Module 14 ist ein Prozessor 15 angeordnet, der die zweite Einheit 3 steuert und den Informationsaustausch zwischen den unterschiedlichen Komponenten regelt. Ein autonomes Energiemodul 16 lädt Energie aus der ersten Einheit 2 auf, wenn diese erste Einheit 2 mit der zweiten Einheit (galvanisch) verbunden ist (für den Fall, dass die erste Einheit 2 als ein Gerät ausgebildet ist). Außerdem weist das Energiemodul 16 Verbindungselemente zur Verbindung mit einem elektrischen Netz auf.

Die zweite Einheit 3 weist weiterhin eine Schnittstelle 17 für Transaktionen mit der ersten Einheit 2 auf. Es gibt zwei unterschiedliche Transaktionen: Übertragung von Energie, wenn das zweite Endgerät mit der ersten Einheit verbunden ist (nur möglich, wenn die erste Einheit als eigenes Gerät ausgebildet ist) und Übertragung der bidirektionalen Informationen und unabhängig davon, ob die zweite Einheit 3 mit der ersten Einheit 2 räumlich verbunden ist oder nicht.

Die zweite Einheit 3 wird insbesondere durch eine tragbare Datenverarbeitungseinrichtung, einen persönlichen digitalen Assistenten" PDA gebildet.

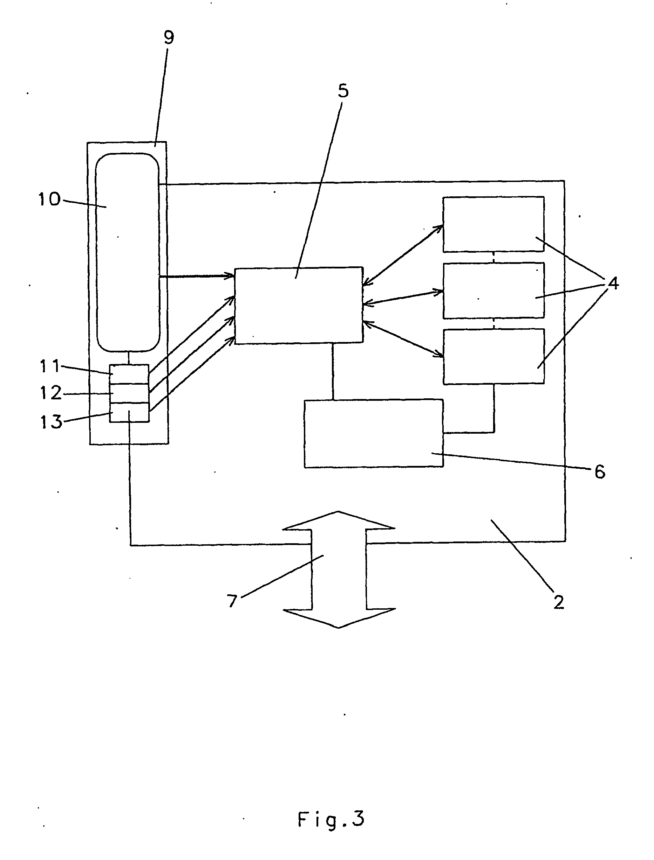

Figur 3 zeigt ein Beispiel eines Blockschaltbildes der ersten Einheit 2 eines erfindungsgemäßen Systems zur Überwachung und Steuerung von Geräten der Telekommunikation. Wie die Figur zeigt, besteht die erste Einheit 2 aus mehreren Erfassungsmodulen 4, wobei vorzugsweise die Anzahl der Erfassungsmodule gleich der Anzahl der zu messenden Signale ist. Die Signale können radioelektrische Signale, elektrische Signale oder Signale anderer Art sein, analoge oder digitale Signale, und sie können ihren Ursprung in der Umgebung des Systems haben oder von dem System selbst gebildet worden sein.
Den Erfassungsmodulen 4 ist ausgangsseitig ein Prozessor 5 zugeordnet, der die Einheit 2 bzw. das gesamte System steuert und den Austausch der Informationen zwischen den verschiedenen Komponenten regelt

Ein Energiemodul 6 verwaltet die Energiezufuhr zu den Komponenten der ersten Einheit 2.

Eine Schnittstelle 7 führt die Transaktionen zwischen der ersten Einheit 2 und der zweiten Einheit 3 durch. Wie schon im Zusammenhang mit Figur 2 beschrieben, gibt es zwei unterschiedliche Transaktionen: Übertragung von Energie, wenn das zweite Endgerät mit der ersten Einheit verbunden ist (nur möglich, wenn die erste Einheit als eigenes Gerät ausgebildet ist) und Übertragung der bidirektionalen Informationen und unabhängig davon, ob die zweite Einheit 3 mit der ersten Einheit 2 räumlich verbunden ist oder nicht. Die erste Einheit 2 kann eine eigene optische Anzeigeeinrichtung 8 (Bildschirm, Berührungsbildschirm, usw.) aufweisen, diese optische Anzeigeeinrichtung 8 kann von der ersten Einheit 2 gesteuert werden, es kann vorgesehen sein, dass die zweite Einheit (mobiles Endgerät) in die erste Einheit integriert ist. Das heißt, dass für den Fall, bei dem die erste Einheit 2 als ein Gerät 22 ausgestaltet ist, dieses Gerät eine eigene optische Anzeigeeinrichtung 8 aufweist, unabhängig davon, ob der ersten Einheit eine zweite Einheit zugeordnet ist.

Wie die Figur 3 auch zeigt, weist die erste Einheit 2 eine Benutzerschnittstelle auf, bestehend aus einem Bildschirm 10 (z.B. ein berührungsempfindlicher Bildschirm), Handbedienelemente 11, Leuchtanzeigen 12 und Höranzeigen 13. Ebenso weist die zweite Einheit 3 Erfassungsmodule 14 auf, wobei deren Anzahl der Anzahl der zu messenden Signale entspricht.

Die zweite Einheit 3 kann von unterschiedlichen Typen erster Einheiten 2 genutzt werden.

Das vorstehend beschriebene System ist in der Weise ausgestaltet, dass eine Steuerung und/oder eine Überwachung der Kopfeinheit der Gemeinschaftsantennenanlage (SMATV) vorzugsweise über das Internet oder mittels Drahtlosstandards (GPRS, UMTS) erfolgt.

Eine Verbindung zwischen der ersten Einheit 3 und der zweiten Einheit (2) erfolgt vorzugsweise mittels der Protokollfamilien IEEE 802.11 und IEE 802.15.

### Bezugszeichenliste

- 1: System zur Überwachung und Steuerung von Geräten der Telekommunikation
- 2: Erste Einheit, Zentraleinheit
- 21: Steuereinheit in Form von Schaltungsplatinen
- 22: Steuereinheit als Gerät
- 221: Aufnahmeöffnung
- 3: Zweite Einheit, periphere Einheit
- 4: Empfangsmodule
- 5: Prozessor
- 6: Energiemodul
- 7: Schnittstelle
- 8: Einheit eigener Präsentation
- 9: Benutzerschnittstelle
- 10: Monitor, Bildschirm
- 11: Handbetätigungsbedienelemente
- 12: Leuchtanzeigeelemente
- 13: Höranzeigeelemente
- 14: Empfangsmodule
- 15: Prozessor
- 16: Autonomes Energiemodul
- 17: Schnittstelle
- S1: Erstes Telekommunikationssignal
- S2: Zweites Telekommunikationssignal
- I1: Erste Information
- 12: Zweite Information

## Patentansprüche

1. System zur Überwachung und Steuerung von Geräten zur Messung von Telekommunikationssignalen,
- wobei das System eine erste System-Einheit (2) und mindestens eine zweite System-Einheit (3) aufweist,
- wobei die erste System-Einheit (2) eine Zentraleinheit ist und die zweite System-Einheit (3) eine Einheit (3) für die Messung von Telekommunikationssignalen an unterschiedlichen Orten ist,
- wobei die mindestens eine zweite System-Einheit (3) in der Weise ausgestaltet ist, dass sie ein erstes Telekommunikationssignal (S1) an die erste System-Einheit (2) überträgt,
- wobei das erste Telekommunikationssignal (S1) eine erste Information (11) über Funktionen enthält, die die erste System-Einheit (2) auszuführen hat,
- wobei die erste System-Einheit (2) in der Weise ausgestaltet ist, dass sie ein zweites Telekommunikationssignal (S2) an die mindestens eine zweite System-Einheit (3) überträgt,
- wobei das zweite Telekommunikationssignal (S2) eine zweite Information (12) über mindestens ein Ergebnis einer von der ersten System-Einheit (2) ausgeführten Funktion enthält,
- wobei die erste System-Einheit (2) und die zweite System-Einheit (3), die eine periphere Einheit ist, zwei separate Einheiten und räumlich getrennt sind oder durch Integration der zweiten System-Einheit (3) in einer Aufnahmeöffnung (221) der ersten System-Einheit (2) miteinander verbunden sind,
- wobei die zweite System-Einheit (2) mobil bezüglich der ersten System-Einheit (3) ist,
- wobei die erste System-Einheit (2) und die zweite System-Einheit (3) in der Weise ausgestaltet sind, dass bei einer Integration der zweiten System-Einheit (3) in der Aufnahmeöffnung (221) der ersten System-Einheit (2) bidirektionale Informationen zwischen beiden System-Einheiten (2, 3) und Energie von der ersten System-Einheit (2) in die zweite System-Einheit (3) übertragen werden, und dass bei einer Nicht-Integration der zweiten System-Einheit (3) in der Aufnahmeöffnung (221) der ersten System-Einheit (2) bidirektionale Informationen zwischen beiden System-Einheiten (2, 3) übertragen werden,
**dadurch gekennzeichnet,**
- **dass** die erste System-Einheit (2) und die zweite System-Einheit (3) jeweils eine optische Anzeigeeinheit zur Anzeige von Informationen und zur Steuerung aufweist, und
- **dass** die erste System-Einheit (2) unabhängig von der zweiten System-Einheit (3) betrieben werden kann.

2. System nach Anspruch 1, **dadurch gekennzeichnet, dass** das System in der Weise ausgestaltet ist, dass das erste Telekommunikationssignal (S1) und das zweite Telekommunikationssignal (S2) jeweils eine Bandbreite zwischen 1,5 Megabit und 2,5 Megabit hat.

3. System nach einem der vorstehenden Ansprüche, **dadurch gekennzeichnet, dass** es in der Weise ausgestaltet ist, dass die Steuerung und/oder die Überwachung einer Kopfeinheit einer Gemeinschaftsantennenanlage (SMATV) über das Internet oder mittels Drahtlosstandards (GPRS, UMTS) erfolgt.

4. System nach einem der vorstehenden Ansprüche, **dadurch gekennzeichnet, dass** es in der Weise ausgestaltet ist, dass eine Verbindung zwischen der ersten System-Einheit (2) und der zweiten System-Einheit (3) mittels der Protokollfamilien IEEE 802.11 und IEE 802.15 erfolgt.

## Claims

1. A system for monitoring and controlling devices for measuring telecommunication signals,
- the system comprising a first system unit (2) and at least one second system unit (3),
- the first system unit (2) being a central unit and the second system unit (3) being a unit (3) for measuring telecommunication signals at different locations,
- the at least one second system unit (3) being designed such that it transmits a first telecommunication signal (S1) to the first system unit (2),
- the first telecommunication signal (S1) containing a first item of information (11) about functions which the first system unit (2) has to execute,
- the first system unit (2) being designed such that it transmits a second telecommunication signal (S2) to the at least one second system unit (3),
- the second telecommunication signal (S2) containing a second item of information (12) about at least one result of a function executed by the first system unit (2),
- the first system unit (2) and the second system unit (3), which is a peripheral unit, being two separate units and being separated spatially or connected together by integration of the second system unit (3) in an accommodation opening (221) of the first system unit (2),
- the second system unit (2) being mobile relative to the first system unit (3),
- the first system unit (2) and the second system unit (3) being designed such that, in the event of integration of the second system unit (3) in the accommodation opening (221) of the first system unit (2), bidirectional information is transmitted between the two system units (2, 3) and power is transmitted from the first system unit (2) to the second system unit (3), and such that, in the event of non-integration of the second system unit (3) in the accommodation opening (221) of the first system unit (2), bidirectional information is transmitted between the two system units (2, 3),
**characterised in that**
- the first system unit (2) and the second system unit (3) in each case comprise an optical display unit for displaying information and for control purposes, and
- the first system unit (2) may be operated independently of the second system unit (3).

2. A system according to claim 1, **characterised in that** the system is designed such that the first telecommunication signal (S1) and the second telecommunication signal (S2) each have a bandwidth of between 1.5 megabits and 2.5 megabits.

3. A system according to any one of the preceding claims, **characterised in that** it is designed such that a headend of a community antenna installation (SMATV) is monitored and/or controlled via the Internet or by means of wireless standards (GPRS, UMTS).

4. A system according to any one of the preceding claims, **characterised in that** it is designed such that the first system unit (2) and the second system unit (3) are connected by means of the protocol families IEEE 802.11 and IEE 802.15.

## Revendications

1. Système destiné à la surveillance et à la commande d'appareils pour mesurer des signaux de télécommunication,
- le système présentant une première unité système (2) et au moins une seconde unité système (3),
- la première unité système (2) étant une unité centrale et la seconde unité système (3) étant une unité (3) pour mesurer des signaux de télécommunication à différentes emplacements,
- l'au moins une seconde unité système (3) étant configurée de telle manière qu'elle transmet un premier signal de télécommunication (S1) à la première unité système (2),
- le premier signal de télécommunication (S1) contenant une première information (I1) sur les fonctions que la première unité système (2) doit exécuter,
- la première unité système (2) étant configurée de telle manière qu'elle transmet un second signal de télécommunication (S2) à l'au moins une seconde unité système (3),
- le second signal de télécommunication (S2) contenant une seconde information (I2) sur au moins un résultat d'une première fonction exécutée par la première unité système (2),
- la première unité système (2) et la seconde unité système (3), qui est une unité périphérique, étant deux unités individuelles et spatialement séparées ou étant mutuellement reliées par l'intégration de la seconde unité système (3) dans une ouverture de réception (221) de la première unité système (2),
- la seconde unité système (2) étant mobile par rapport à la première unité système (3),
- la première unité système (2) et la seconde unité système (3) étant configurées de telle manière que, en cas d'intégration de la seconde unité système (3) dans l'ouverture de réception (221) de la première unité système (2), des informations bidirectionnelles peuvent être transmises entre les deux unités système (2, 3) et l'énergie peut être transmise de la première unité système (2) à la seconde unité système (3), et que, en cas de non-intégration de la seconde unité système (3) dans l'ouverture de réception (221) de la première unité système (2), des informations bidirectionnelles peuvent être transmises entre les deux unités système (2, 3),
**caractérisé par le fait**
- **que** la première unité système (2) et la seconde unité système (3) présentent chacune une unité d'affichage visuelle pour l'affichage d'informations et pour la commande, et
- **que** la première unité système (2) peut être operée indépendamment de la seconde unité système (3).

2. Système selon la revendication 1, **caractérisé par le fait que** le système est configuré de telle manière que le premier signal de télécommunication (S1) et le second signal de télécommunication (S2) ont chacun une bande passante située entre 1,5 mégabits et 2,5 mégabits.

3. Système selon l'une des revendications précédentes, **caractérisé par le fait qu'**il est configuré de telle manière que la commande et/ou la surveillance d'une unité de tête d'un système d'antenne collectif (SMATV) s'effectue via internet ou au moyen de standards de réseaux sans fil (GPRS, UMTS).

4. Système selon l'une des revendications précédentes, **caractérisé par le fait qu'**il est configuré de telle manière qu'une liaison entre la première unité système (2) et la seconde unité système (3) s'effectue au moyen des familles de protocoles IEEE 802.11 et IEE 802.15.
